Europäisches Patentamt

European Patent Office

Office européen des brevets

(11) Publication number: **0 484 779 A2**

# EUROPEAN PATENT APPLICATION

(21) Application number: **91118339.0**

(22) Date of filing: **28.10.91**

(51) Int. Cl.5: **G11B 5/596**

(30) Priority: **09.11.90 US 611167**

(43) Date of publication of application:
**13.05.92 Bulletin 92/20**

(84) Designated Contracting States:
**BE DE FR GB IT LU NL**

(71) Applicant: **INSITE PERIPHERALS, INC.**
**4433 Fortran Drive**
**San Jose, CA. 95134-2302(US)**

(72) Inventor: **Godwin, Jimmy D.**
**12386 Brookglen DR**
**Saratoga CA 95070-3411(US)**
Inventor: **Otis, Alton B., Jr.**
**239 Roosevelt Way**
**San Francisco, CA 94114(US)**

Inventor: **Rose, Andrew M.**
**2501 Mardell Way**
**Mountain View, CA 94043(US)**
Inventor: **Strysko, Mark E.**
**4405 Tilbury Drive**
**San Jose, CA 95130(US)**
Inventor: **Williams, Roger O.**
**47267 Rancho Higuera**
**Fremont, CA 94539(US)**
Inventor: **Williams, Stephen P.**
**571 Creekside Lane**
**Morgan Hill, CA 95037(US)**

(74) Representative: **Blumbach Weser Bergen**
**Kramer Zwirner Hoffmann Patentanwälte**
**Sonnenberger Strasse 100**
**W-6200 Wiesbaden 1(DE)**

(54) **Magnetic media containing a half-checkered reference track for referencing the magnetic head position.**

(57) A magnetic disk having a plurality of optical servo tracks and an indelible reference track used for determining the offset distance between a magnetic read/write transducer and an optical servo head. The indelible reference track has a pitted half-checkered configuration comprised of a plurlity of units separated by spacer areas and positioned about a reference circle. Each unit comprises a first region and a second region positioned on opposite sides of said reference circle with said first region diagonally disposed to said second region. Said first and second regions are formed by embossing a plurality of pits into the magnetic layer of the floppy disk to a depth of about one micron.

Fig_3

## BACKGROUND OF THE INVENTION

### Field of the Invention

The present invention relates to magnetic information storage medium and more particularly to such a medium having a reference track marked on the medium surface for orienting a magnetic read/write head and for allowing track zero to be defined.

### Description of the Prior Art

Very high track density flexible magnetic media having a reference track is known in the prior art. For example, a medium with a reference track 14 as shown in Figs. 1 and 2, is disclosed in pending U.S. Patent Application Serial No. 07/269,779, filed November 10, 1988 and assigned to the assignee of the current application.

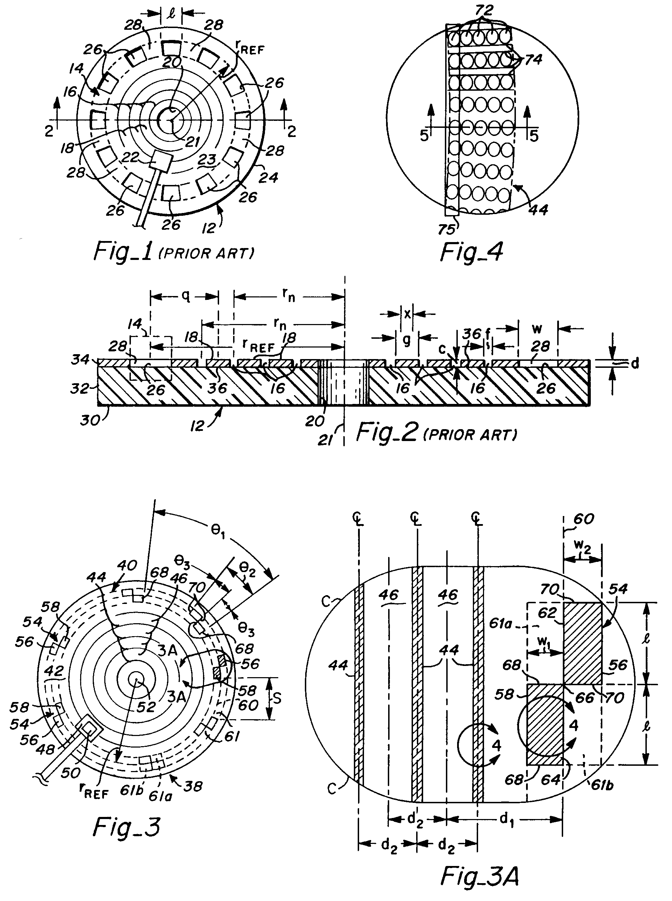

Figs. 1 and 2 illustrates a permanently referenced magnetic disk, represented by the general reference numeral 12, comprising a permanent reference track 14, a plurality of servo-tracking (groove) areas 16, a plurality of data writing (land) areas 18 and a central aperture 20 having an axis of rotation 21. When the disk 12 is in use on a computer disk drive, a conventional magnetic read/write head 22 is positioned over a surface 23 of the disk 12 for reading and/or writing magnetic data on the disk 12.

The reference track 14 is a circular region having a constant radius $r_{ref}$ measured from the axis of rotation 21 to the center of the reference track 14, and which is generally positioned near an outer peripheral edge 24 of the disk 12. The reference track 14 may comprise a plurality of interruptions 26 which may be in the form of depressed areas in the surface of the disk 12 having a length 1. The interruptions 26 form a noncontinuous ring on the surface of the disk 12 with each interruption 26 separated from an adjacent interruption 26 by a spacer area 28. The spacer areas 28 record and yield a higher amplitude magnetic signal level than that of the interruption 26.

The groove areas 16 are of a configuration capable of conveying optical servo-tracking information to an optical servo head. Each individual groove area is a continuous ring of constant radius circumscribing the hole 20. All of the groove areas have the common axis of rotation 21 such that the radius for each groove area 16 differs from the radius of an adjacent groove area 16 by a constant amount. The writing areas 18 are regions on the surface of the disk 12 capable of storing information for reading by the read/write head 22. Each individual writing area 18 is bounded on its two sides by adjacent groove areas 16 and the writing areas 18 reflect more light than the groove areas 16.

The physical relationship of the interruptions 26 and spacer areas 28 to the groove areas 16 and the writing areas 18 are illustrated in Fig. 2 which is a cross-sectional view taken along the line 2-2 of Fig. 1. The disk 12 comprises a medium 30 of the type used for conventional 3.5 inch floppy disks with an inert layer 32 coated with a magnetic layer 34. The interruptions 26 are rectangular shaped indentations cut through the magnetic layer 34. Preferably, the indentations do not protrude into the inert layer 32. Each interruption 26 has a depth d and width w. The cross-section of the groove areas 16 is a rectangular indentation cut through the magnetic layer 34 with a depth c and a width f. Each groove area 16 has a radius $r_n$ measured from the axis of rotation 21 to the center of the groove area 16. Each groove area 16 is equally spaced from each adjacent groove area 16. The radius $r_{ref}$ exceeds the largest $r_n$, the reference track width w exceeds the groove width f and the reference track depth d is approximately equal to the groove depth c. The writing areas 18 have a width g. A data track width x is defined as the width of a written data bit and this is typically less than the width g of the data writing areas 18. One of the data writing areas 18 is arbitrarily defined as a data track zero 36 with the center of data track zero 36 separated from the center of reference track 14 by a distance q. Representative dimensions for the reference tracks 26, groove areas 16 and land areas 18 are:

w = 720 microinches (1 microinch = $1\times10^{-6}$ inches), d = 40 to 120 microinches, l = .075 inches, c = 20 to 40 microinches, f = 180 microinches, and g = 620 microinches.

The permanent reference track 14 provides a reference feature for determining the offset between the magnetic read/write head 22 and an optical head utilized to detect the optical servo tracks 16. In the general procedure, an arbitrary magnetic data pattern is written on the surface 23. As the head 22 sweeps over the surface 23 in the read mode, it sweeps over the surface 23 in the read mode, it detects the signal from the data pattern until the reference track 14 is encountered. In those areas of the reference track 14 where the magnetic layer 34 has been removed, the lower amplitude magnetic signals are detected thereby yielding a modulated readback signal. Once the modulated readback signal is obtained, the offset between the magnetic read/write head 22 and the optical head is determined.

A problem with the reference track 14 is that the pattern of the interruptions 26 does not yield a modulated readback signal that is optimized for calibration. Thus, to determine the center, it is necessary to scan across the track 14, store the values in a table and then determine the center. This requires the expenditure of a relative substantial period of time.

Another use for the reference track 14 is in generating an electronic reference track on another surface of the disk 12. This is accomplished by writing an electronic reference track on the other surface that mimics the modulated readback signal generated by the reference track 14.

The distance q is generally an integer multiple of the track-to-track spacing which is the sum of f and g. Thus places the center line of the reference track in the same relationship to the optical servo in use as the center line of the data tracks are to the optical servo. All the tracks, data and reference, are separated by exactly one track pitch, i.e. f + g. This means that by finding the center of the reference track with respect to the optical signals, the center of the data tracks with respect to the optical signals is also known.

Another limitation of the prior art is the difficulty in accurately detecting the center. The typical readback of a profile provides sharp edges, but a poorly defined, smoothed peak. The prior art uses the sharp edges to infer the location of the peak. This has two limitations: it is a slow process to scan the track and filter the noise; and any inaccuracies in the actual position achieved while performing the scan will introduce error in the table which, in turn, will incorrectly locate the track center. Positioning errors will occur if the position transducer system has any non-linearity. The prior art has a servo signal that is periodic every track pitch, i.e. f + g. This yields very accurate spacing from one track to the next, but does not guarantee accurate positioning within a single period.

In manufacturing media containing permanent features, the technique of embossing has been utilized in the video disk industry. For example, K.D. Broadbent, in "A Review of the MCA Disco-Vision System", Journal of the SMPTE (1974), describes the laser video mastering technique as well as the servo and read back methods. A master disk is formed by using an argon laser to ablate pits in a metallic layer deposited on a glass plate. The master disk is then coated with photoresist which is exposed through the pits. After washing away the undeveloped photoresist, "bumps" of polymerized photoresist are left over the pits. This paper refers to, but does not disclose, a process for using the master disk to form replicas on a polyethylene terephthalate (Mylar) medium.

Broadbent's paper also states that the master disk can be electrolytically treated to form a stamper tool from which replicas are thermoformed.

J.S. Winslow, in "Mastering and Replication of Reflective Videodiscs", IEEE Transactions on Consumer Electronics, p. 318, November 1976, describes the videodisk mastering technique in further detail.

Similarly, B. Jacobs, in "Laser Beam Recording of Video Master Disks", Applied Optics, Vol. 17, p. 2001 (July 1, 1978), describes the process of making a master disk using a laser to inscribe a pit pattern on a rotating substrate coated with a thin film of photoresist.

An article in OEP, p. 48, May 1987, entitled "Daicel Leads Development of the Optical Memory Disk Supported by Chemical Technology", shows how a stamper disk is used to form an optical disk through an injection molding process.

R.E. Acosta, et al., in "Floppy Disc Embossing For Servo Applications", IBM Technical Disclosure Bulletin, Vol. 21, No. 10 (March 1979), suggests adopting read-only video technology for the servo control of floppy disks. It is suggested that a master die could be used to stamp or emboss a pattern of indentations for servo tracking purposes on a magnetic recording medium. However, no actual stamping method or servo pattern is disclosed.

None of the prior art discloses a practical method for applying an optimized permanent reference to a floppy disk using embossing techniques.

## SUMMARY OF THE PRESENT INVENTION

It is therefore an object of the present invention to provide a permanent reference track that yields an optimized modulated readback signal.

It is another object of the present invention to provide a permanent reference track that can be applied to a magnetic medium with embossing techniques.

Briefly, the preferred embodiment of the present invention includes a floppy disk for use in a personal computer. The disk has a pitted half-checkered reference track used to position a magnetic read/write transducer relative to a plurality of optical servo tracks on the disk. The pitted half-checkered reference track is positioned about the outer periphery of the disk and includes a plurality of pitted half-checkered units radially positioned around the reference track. The pitted half-checkered units comprise an upper polygonal region and a lower polygonal region positioned on opposite sides of the reference radius in diagonal relation to each other. Adjacent pitted half-checkered units are separated from each other by a spacer area. The floppy disk also includes a plurality of optical servo tracks arranged in circles concentric with the pitted half-checkered reference track.

The upper and lower polygonal regions are comprised of a plurality of rows of pits embossed in the magnetic layer to an approximate depth of one micron. Typically, there are twenty pits per row and a row extends along a 720 microinch distance. Higher amplitude magnetic signals can be stored on the spacer areas than on the upper and lower polygonal regions because the pits decrease the volume of magnetic layer available for storing data.

In operation, magnetic data is recorded on the surface of the floppy disk. The magnetic read/write transducer then sweeps over the surface during the read mode. When the pitted half-checkered reference track is encountered, a modulated readback signal is detected due to the differing amplitudes of the data stored on the spacer areas and on the upper and lower polygonal regions. By centering the magnetic read/write transducer over the pitted half-checkered reference track, the offset between the magnetic read/write transducer and an optical servo head can be determined and this information can be used to detect the optical servo tracks.

The configuration of the pitted half-checkered reference track is chosen so as to optimize the modulated signal such that the reference radius, i.e. center of the reference track, is readily determined and an exactly known distance to the center of the optical servo tracks is determined.

In an alternative embodiment, the upper and lower polygonal regions are comprised of solid regions in which some of the magnetic layer has been removed with a laser instead of by embossing the pitted pattern.

An advantage of the present invention is that the pitted half-checkered configuration of the reference track optimizes manufacturability of magnetic data storage media.

A further advantage of the present invention is that it provides a magnetic data storage media which assists in optimizing calibration accuracy and time for a computer disk drive.

Another advantage of the present invention is that the pitted half-checkered configuration can be applied to a floppy disk by embossing techniques.

These and other objects and advantages of the present invention will no doubt become obvious to those of ordinary skill in the art after having read the following detailed description of the preferred embodiments which are illustrated in the various drawing figures.

## IN THE DRAWING

Fig. 1 is a top view of a circular magnetic medium having an indelible reference track according to the prior art as previously discussed;

Fig. 2 is a cross-sectional view of the magnetic medium taken along line 2-2 of Fig. 1;

Fig. 3 is a top view of a circular magnetic medium having a half-checkered reference track according to the present invention (not to scale) and Fig. 3A is an enlarged view of a segment of such medium;

Fig. 4 is an enlarged top view of a portion of the half-checkered reference track of Fig. 3A to illustrate an embossed area;

Fig. 5 is a cross-sectional view taken along the line 5-5 of Fig. 4;

Fig. 6 is a flow chart demonstrating a method for making magnetic medium shown in Fig. 3;

Fig. 7 illustrates a side view of a hydraulic press (not to scale) for use in the process of Fig. 6;

Fig. 8 is a perspective view with an insert of a stamper disk for use in the process of Fig. 6;

Fig. 9 is a top view of an apparatus for positioning a magnetic read/write head over a magnetic disk of the present invention;

Fig. 10 is a side view of a magnetic and optical head positioned over a magnetic disk of the present invention;

Fig. 11A are graphical representations of the readback signal received by the magnetic head as it passes over the half-checkered reference track of a disk of the present invention;

Fig. 11B are diagrammatical illustrations of the relative position of the magnetic head and reference corresponding to each of readback signals of Fig. 11A;

Fig. 12 is an enlarged top view of a portion of an alternative embodiment of a half-checkered reference track of a disk of the present invention;

Fig. 13 is a cross-sectional view taken along the line 13-13 of Fig. 12; and

Fig. 14 diagrammatically illustrates waveforms of readback signals used for formatting the disk.

## DETAILED DESCRIPTION OF THE PREFERRED EMBODIMENT

Fig. 3 illustrates a magnetic disk, referred to by the general reference character 38 and having a half-checkered reference track 40 positioned on a surface 42 of the disk 38. A plurality of optical servo tracks 44 and a plurality of land (writing) areas 46 are also positioned on the surface 42. A magnetic read/write head 48 is positioned over the surface 42 for reading and/or writing magnetic data on the disk 38. An optical servo head 50, which reads optical servo information generated by the optical servo tracks 44, is positioned near the magnetic head 48. The magnetic disk 38 may be a floppy disk sized for use in a disk drive of a personal computer. However, the magnetic disk 38 could also be a hard disk for a computer.

The optical servo tracks 44 could be of any configuration capable of conveying optical servo tracking information to the optical servo head 50. In the illustrated embodiment 38, each track 44 comprises a continuous ring having an axis of rotation common to an axis of rotation 52 of the disk 38. The centerline of each individual optical servo track 44 is a constant distance (radius) from the axis of rotation 52. Adjacent optical servo tracks 44 are equally spaced from each other and have different radii. The land areas 46 are the regions on the surface 42 that exist between adjacent optical servo tracks 44. Magnetic information is written and stored on the land areas 46 and the land areas 46 reflect more light than the optical servo tracks 44.

The reference track 40 comprises a plurality of half-checkered area units 54 arranged about a circle that is coaxial with the axis of rotation 52. Each half-checkered area unit 54 includes an upper polygonal region 56 and a lower polygonal region 58. To further illustrate, Fig. 3A illustrates a magnified view of an insert "C" of the disk 38. Fig. 3A illustrates one of the half-checkered units 54 in more detail. The pitted half-checkered reference track 40 is centered about a reference centerline 60 which forms a circle that is coaxial with the axis of rotation 52 and the optical servo tracks 44. Centerline 60 has a radius $r_{ref}$. Note, the centerline 60 exists only for purposes of reference and is not physically marked on the disk 38. The reference track 40 includes a plurality of spacer areas 61 which are the regions of the surface 42 that exist between adjacent half-checkered units 54. As most clearly illustrated in Fig. 3A, each area unit 54 includes a region 61a and a region 61b. The region 61a is essentially the same dimension as the region 58 and radially abutting the region 56. The region 61B is essentially of the same dimension as the region 56 and radially abutting the region 58. The spacer areas 61 occupy the region having the circumferential dimension "s" shown in Fig. 3, which is the circumferential distance between adjacent half-checkered unit areas 54. Higher amplitude magnetic data can be stored on the spacer areas 61 than on the upper and lower polygonal regions 56 and 58. The upper and lower polygonal regions 56 and 58 each have a longitudinal side 62 and 64, respectively boardering on the reference centerline 60. The upper polygonal region 56 is radially offset from the lower polygonal region 58 such that the longitudinal side 62 does not overlap the longitudinal side 64. The upper and lower polygonal regions 56 and 58 are contiguous at a point 66. The longitudinal sides 62 and 64 are each of the same length "l". A distance "$d_1$" exists between the centerline 60 and the centerline of the optical servo track 44 closest to the track 40 and a distance "$d_2$" separates the centerlines of adjacent optical servo tracks 44. A pair of lateral sides 68, of a width "$w_1$", define the lower polygonal region 58 and a pair of lateral sides 70, of the width "$w_2$", define the upper polygonal region 56.

Referring to Fig. 3, it can be seen that an angle $\phi_1$ exists between the lateral side 68 of the lower polygonal region 58 in one half-checkered unit area 54 and the analogous lateral side 68 of the lower polygonal region 58 in an adjacent half-checkered unit area 54.

An angle $\phi_2$ exists between the outside lateral side 70 and the outside lateral side 68 within each of the half-checkered unit areas 54. An angle $\phi_3$ exists between the two lateral sides 68 of the region 58 and between the two lateral sides 70 of the regions 56. Thus, the angle of each unit area 54 is $\phi_2$ which is equal to twice the angle $\phi_3$ and $\phi_3$ is the angle of each of the regions 56 and 58.

Fig. 4 illustrates a magnified schematic plan view of the region of one of the optical servo tracks 44 indicated by the circle 4 in the magnified insert of Fig. 3A. Each optical servo track 44 includes a plurality of pits 72 arranged in a plurality of rows 74. Each row 74 is comprised of "n" number of pits 72 with each of the pits 72 being uniformly spaced from adjacent pits 72. The plan view of Fig. 4, illustrates the pits 72 as having an approximately oval shape with "n" equal to five. The existence of a plurality of rows 74 generates "n" columns 75 of pits. The columns are in a circular pattern having an axis of rotation 52.

The upper and lower polygonal regions 56 and 58 of the track 40 are also comprised of a pattern of pits. Thus, Fig. 4 also illustrates a schematic plan view of the area of the lower polygonal region 58 indicated by the circle 4 in the magnified insert of Fig. 3. For the upper and lower polygonal regions 58, n is typically equal to 20 pits per row, thus making the polygonal regions 56 and 58 about four times wider than the optical servo tracks 44.

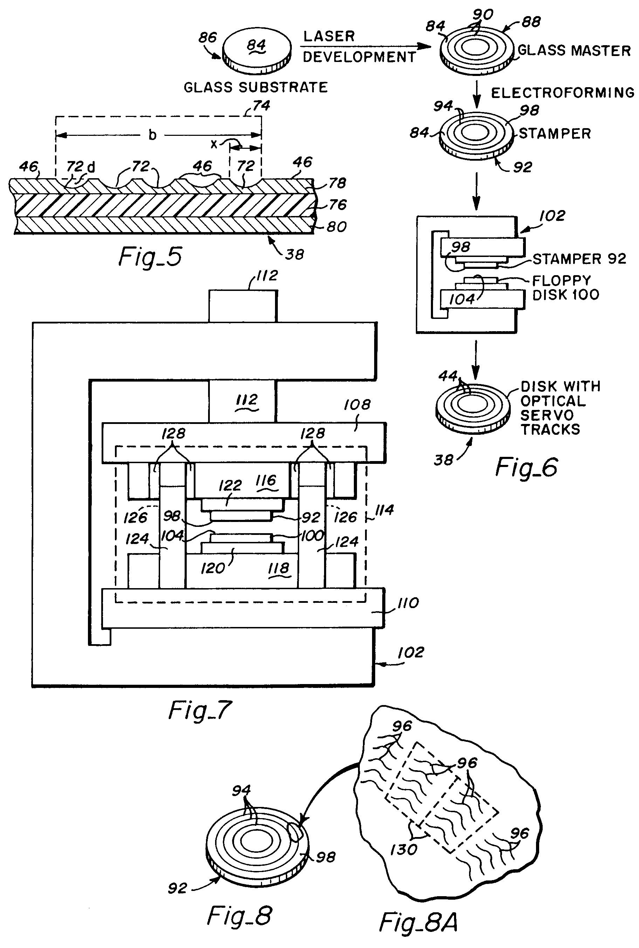

Fig. 5 is a cross-sectional view of one of the rows 74. The magnetic disk 38 is comprised of a polyethylene terephthalate (Mylar) substrate layer 76 coated on one side with a first magnetic recording layer 78 and on the opposite side with a second magnetic recording layer 80. In the preferred embodiment, the magnetic recording layers 78 and 80 comprise barium ferrite encapsulated in polymer binders. However, other materials such as $\gamma$ - ferric oxide or other metals, suspended in other binders, can also be used. The pits 72 are depressed regions in the surface 42 having a depth "d" and a width "x". Typically, the depth "d" is chosen so that the pits 72 do not extend completely through the magnetic recording layer 78. A plurality of smooth regions surround each of the pits 72. The smooth regions reflect light better than the pits 72. The radial surface outside of the rows 74 is continuous with the land area 46. The depth "d" is approximately twenty microinches, the width "x" is approximately thirty microinches and for rows 74 having five pits, the width "b" is approximately 180 microinches.

Referring to Figs. 3 and 3A, representative values for the indicated dimensions and angles are as follows: $\emptyset_1$ = 6.91°, $\emptyset_2$ = 3.46°, $\emptyset_3$ = 1.73°, $d_1$ = .002 inches, $d_2$ = .0008 inches, S = .096 inches, $\ell$ = .048 inches, $w_1$ = $w_2$ = .00072 inches and $r_{ref}$ = 1.59035 inches.

Fig. 6 is a flowchart showing the steps for imprinting the reference track 40 and the optical servo tracks 44 on the magnetic disk 38. A surface 84 of a glass substrate 86 is coated with photoresist and a laser beam is utilized to expose a plurality of areas having the configuration of the pits 72. The photoresist is developed to remove the exposed areas, thus forming a glass master 88 which includes the coating of photoresist containing a plurality of holes 90 where the exposed areas have been removed. The glass master 88 is then plated with a metal coating, such as an eleven mil thick plate of nickel, by an electroforming process, to yield a stamper disk 92 which is then separated from the glass master 88. After the metal stamper disk 92 is separated from the glass master 88, a template 94 comprising a plurality of metal bumps 96 (shown in Fig. 8A) remains on a surface 98 of the stamper disk 92. The metal bumps 96 are formed during the electroplating process when metal is deposited in the holes 90 of the photoresist coating.

The stamper disk 92 and a conventional flexible magnetic (floppy) disk 100, such as a 2.0, 3.5, 5.25 or 8.0 inch floppy disk, are mounted on flat plates and assembled in a conventional press 102. When the floppy disk 100 and the stamper disk 92 are assembled in the press 102, a surface 104 of the floppy disk 100 and the surface 98 of the stamper disk 92, must be parallel. In the preferred embodiment, a 3.5 inch floppy disk conforming to the ANSI specification #X3B/86-57 and having a barium ferrite layer as the magnetic recording layer 78 is utilized as the flexible magnetic disk 100.

Fig. 7 illustrates the press 102 in the form of a one hundred ton hydraulic press. Other types of presses, besides hydraulic presses, could be used. The press 102 comprises an upper press member 108, a lower press member 110 and a hydraulic system 112, and a precision die set 114. The die set 114 includes a top die plate 116, a die base 118, a flat disk mount 120, a stamper disk mount 122, a first pair of guide pins 124, a second pair of guide pins 126 (not shown) and a plurality of bearings 128, positioned between the upper and lower press members 108 and 110, respectively. The flexible magnetic disk 100 is placed on the flat disk mount 120, which is positioned on the die base 118, and the stamper 92 is positioned on the stamper disk mount 122 which is attached to the top die plate 116. The top die plate 116 and the die base 118 are positioned on the upper and lower press members 108 and 110, respectively. The first pair of guide pins 124 extend from the die base 118 into the top die plate 116 and allow the top die plate 116 to precisely slide down toward the die base 118. The second pair of guide pins 126 function identically to the guide pins 124 and are positioned directly behind the guide pins 124 in Fig. 7 at a distance from the guide pins 124. The plurality of bearings 128 are positioned about the guide pins 124 and 126 for controlling the sliding motion of the top die plate 116 relative to the guide pins 124 and 126. The hydraulic system 112 provides the force for moving the upper and lower press members 108 and 110 together and thus presses the stamper 92 against the floppy disk 100 under pressure, typically in the range of five to ten tons per square inch. The flat disk mount 120 maintains the surface 104 of floppy disk 100, parallel to the surface 98 by providing a flat, rigid support surface.

Fig. 8 illustrates the stamper disk 92 in more detail with a magnified section illustrated in Fig. 8A. The template 94 includes the plurality of raised areas 96 arranged in a plurality of rows 130. The shape of each raised area 96 is curved and has the shape of the pits 72 shown in Figs. 3 and 5.

The magnetic disk 38 is formed by mounting the stamper disk 92 on the upper member 108 of the hydraulic press 102. The floppy disk 100 is mounted on the flat disk mount 120 and the hydraulic press 102 is closed under approximately nine tons per square inch of pressure forcing the stamper disk 92 and the floppy disk 100 into contact. The raised areas 96 are forced into the surface 104 of the floppy disk 100 thereby creating the pits 72 arranged in the rows 74 corresponding to the template 94. It is believed that the polymer binder in the magnetic layer 78 of the floppy disk 100 is displaced beyond its elastic limit by the stamping action thus yielding a permanent deformation in the form of the pits 72.

In order to transfer the pattern of the template 94 uniformly to the surface 104, it is necessary that the surfaces 104 and 98 be oriented parallel to each other when the press 102 is closed. When the flat disk mount 120 is utilized, the floppy disk 100 and the flat disk mount 120 must be properly aligned with the stamper disk 92 before the press 102 is closed in order to insure the proper parallel relationship. In the preferred embodiment, this alignment is achieved by housing the stamper disk 92 in the precision die set 114 that maintains the surfaces 98 and 104 parallel within $5.0 \times 10^{-5}$

inches. Under these tolerances, the stamper 92 and the floppy disk 100 will comply due to clearances in the bearings 128.

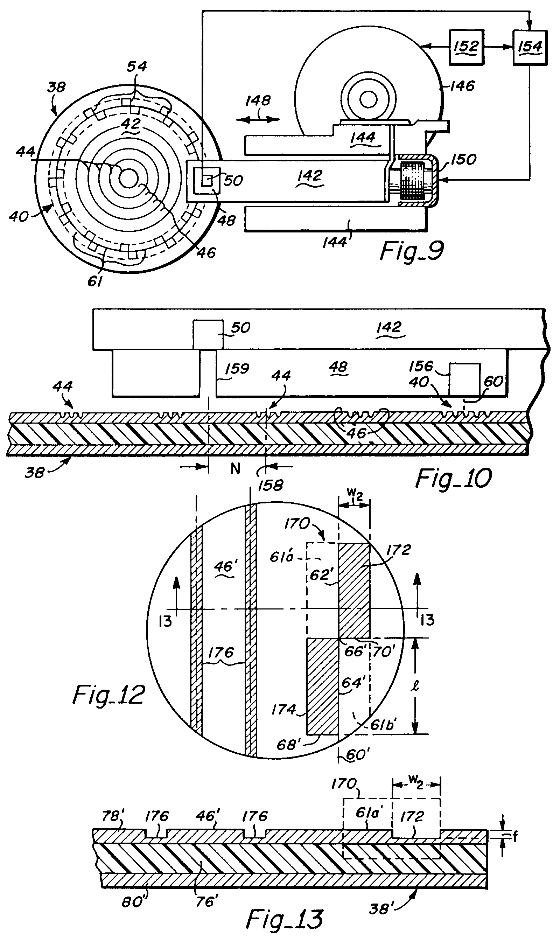

Fig. 9 demonstrates an apparatus for positioning the optical servo head 50 and the magnetic head 48 over the disk 38. The magnetic head 48 and the optical servo head 50 are positioned on a fine position actuator 142 over the disk 38. The fine position actuator 142 is mechanically connected to a base carriage 144 which is mechanically connected to a stepper motor 146 capable of moving the base carriage 144 in discrete steps in the forward or reverse directions indicated by an arrow 148 in Fig. 9. The fine position actuator 142 moves with the base carriage 144 and is also capable of moving independently of the base carriage 144 when driven by a voice coil motor 150. A control processor 152 is electrically connected to the stepper motor 146 and to a servo controller 154. The servo controller 154 is electrically connected to the voice coil motor 150 and to the servo head 50.

Fig. 10 shows the magnetic head 48 positioned over a part of the disk 38. A magnetic read/write element 156, which is the component of the head 48 that writes and/or reads magnetic data on the surface of the disk 38, is positioned over the area of the reference centerline 60. When the magnetic element 156 is positioned over the centerline 60, the optical head 50 is offset from a servo track centerline 158 for one of the servo tracks 44 by a magnetic-to-servo offset distance N. Typically, the light beam from the optical head 50 accesses the surface of the magnetic disk 38 through an aperture 159 existing in the magnetic read/write head 48.

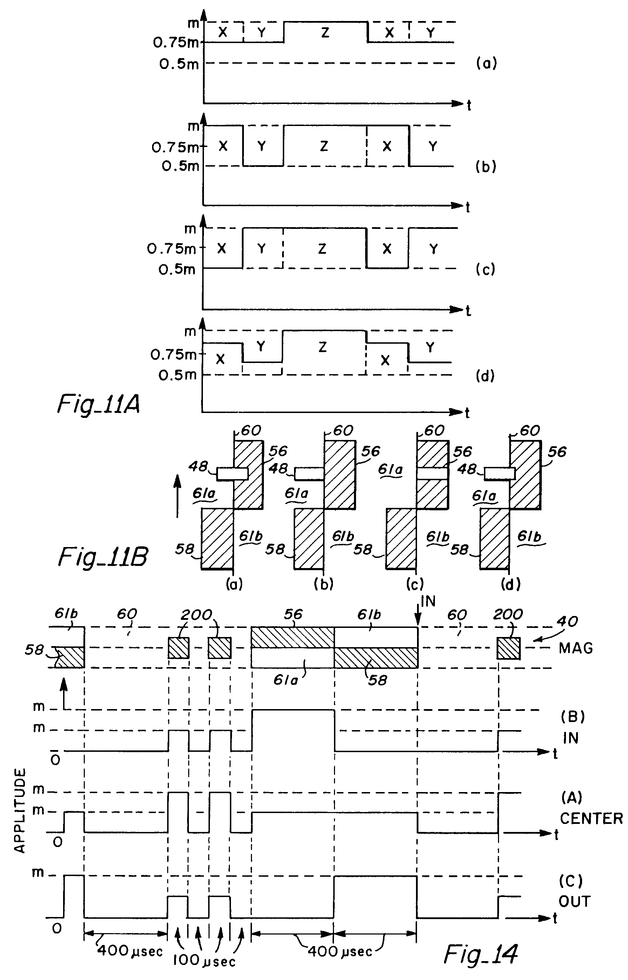

Fig. 11A is a graphical representation of the readback signal versus time as the disk 38 is rotated counter-clockwise at a constant speed relative to the head 48. The signals in Fig. 11A are segmented into areas x, y and z with x representing the signal as the read/write head 48 passes over the region 56 and 61(a), y represents the signal as the head 48 passes over the regions 58 and 61(b), and z represents the signal as the head passes over the spacer areas 61. Fig. 11A (a) illustrates the signal when the magnetic read/write head 48 is properly centered on the centerline 60 as diagrammatically illustrated in Fig. 11B(a). In that case, as the read/write head 48 passes over the areas 56 and 61(a) the amplitude of segment x will be one-half of the difference between the maximum and minimum values because each of the areas 61(a) and 56 will be covered by one-half of the head 48. For illustration purposes, the maximum is illustrated as value m. Also, the etched areas 56 and 58 will have some residual magnetic signal since it will not have the magnetic materials completely removed. Thus, for purposes of illustration, that value is designated as 0.5m which thus becomes the minimum value. In actual practice, the minimum may be more or less than one-half of the maximum depending on the degree of etching. Then, as the disk 38 rotates to cover the areas 58 and 61(b) the amplitude signal y of the signal will still be the same because the areas 61(b) and 58 are each covered by one-half of the head 48. Then as the disk 38 further rotates, the head 48 is over one of the spacer areas 61, such that the amplitude of segment z is at a maximum. Then, as the disk 38 continues to rotate, the head 48 comes into contact with the next area 54, such that the cycle of the signal repeats.

Fig. 11A(b) represents the situation when the magnetic read/write head 48 is offset from the centerline 60 inward toward the axis of rotation 52 by an amount equal to one-half the width of the head 48. This is diagrammatically illustrated in Fig. 11B(b). In that case, as the read/write head 48 passes over the areas 61(a), the amplitude of segment x will be greater than in the case of Fig. 11-(a), e.g. m because it will cover all of the area 61-(a). Then, as the disk 38 rotates to cover the etched area 58, the head 48 covers all of the area 58 so that the signal level is 0.5m. Thus, the total amplitude of segment y will remain one-half of maximum. However, since the amplitude for segment x exceeds that of y, it indicates that the head 48 is off-center inwardly and the magnitude of segment x is proportional to the amount of offset.

Fig. 11A(c) represents the situation when the magnetic head 48 is offset from the centerline 60 outwardly from the axis of rotation 52 by an amount equal to one-half the width of the head 48. This is diagrammatically illustrated in Fig. 11B(c). In that case, as the read/write head 48 passes over the etched area 56 the amplitude segment x will be a minimum, e.g. 0.5m. Then, as the disk 48 rotates toward the area 61(b), the full width area of 61(b) is covered and the amplitude of segment y is m and exceeds the magnitude of segment x, thereby indicating that the head 48 is off-center outwardly and the magnitude of segment y is proportional to the amount of offset.

Fig. 11A(d) represents the situation when the magnetic head 48 is offset from the centerline 60 by an amount less than one-half the width of the head 48. This is diagrammatically illustrated in Fig. 11B(d). It also illustrates that the degree of offset is inward. In that case, as the head 48 passes over the areas 56 and 61a, the area 61a has the most influence. Thus, the segment x signal will be greater than 0.75m. Then as the head moves over area 58 and 61b, the area 61b has the most influence such that segment y signal will be less than 0.75m. Thus, when a signal of the nature wherein x and/or y is between the maximum and minimum, the relative magnitude of the two segments illustrate the magnitude of offset.

Fig. 12 shows an alternative embodiment of the pitted half-checkered unit area 54 referred to as an inscribed half-checkered unit area 170. Elements of the inscribed half-checkered unit area 170 common to elements of the unit area 54 are referred to by the same numeral followed by a prime symbol.

The inscribed half-checkered unit area 170 is completely analogous to the pitted half-checkered unit area 54 and a plurality of the inscribed half-checkered unit areas 170 are substituted in the reference track 40 in place of the pitted half-checkered unit areas 54 to yield a half-checkered reference track 40' that functions in the same manner as the track 40.

In Fig. 12, a portion of the reference track 40' analogous to the magnified insert of Fig. 3A, is shown. An inscribed upper polygonal region 172 and an inscribed lower polygonal region 174 have replaced the upper and lower polygonal regions 56 and 58, respectively. The longitudinal sides 62' and 64' border on the reference centerline 60' and the regions 61a' and 61b' are positioned adjacent to the inscribed upper and lower polygonal regions 172 and 174, respectively. A plurality of inscribed optical servo tracks 176 have replaced the optical servo tracks 44.

Fig. 13 shows a cross-section of the inscribed half-checkered unit 170 taken along the line 13-13 of Fig. 12. The inscribed upper polygonal region 172 is a roughly rectangular slot cut into the magnetic layer 78' to a depth "f", which is typically about one micron, and has a width $w_2$ which is the same as that for the upper polygonal region 56. Generally, a laser is used to inscribe (cut) the upper and lower polygonal regions 172 and 174 and the inscribed optical servo tracks 176 into the magnetic disk 38'.

Referring back to Fig. 9, a technique for positioning the magnetic read/write head 48 relative to the disk 38 can be explained. The stepper motor 146 is capable of moving the base carriage 144, and hence the fine position actuator 142, in approximately 83 discrete steps (detents) of approximately 7.4 mils per step. The voice coil motor 150 is capable or moving the fine position actuator 142, and hence the head 48, over a span of approximately ±20 mils from the center of a detent. Thus, by a combination of coarse and fine positioning, the head 48 can be positioned at any location on the surface 42.

The optical servo head 50 reads optical servo information from the servo tracking areas 44 and sends it to the servo controller 154. The information from the optical head 50 is an error signal that indicates how far the head 50 is offset from a position equidistant between two adjacent groove areas 44. The servo controller 154 combines this signal with an offset signal from the control processor 152 and then drives the fine position actuator 142 until the net result is zero. The result is that the head 48 is locked at the offset specified by the control processor 152. Changing the head offset within a track, or moving the head 48 to a new track, is accomplished via the offset signal from the control processor. To illustrate this procedure, assume that the offset signal has one hundred discrete values from 0 to 99 where the value zero positions the servo head 50 over a first servo groove, the value fifty positions the servo head 50 equidistant between the first servo groove and a second servo groove, and the value ninety-nine positions the servo head 50 just to the outside of the center of the second servo groove.

Another way of envisioning this process is to consider the fine position actuator 142 as a device having 5100 discrete, lockable, positions numbered 0-5099 covering the 51 tracks within its positioning range (±25). The outermost track is covered by positions 0-99, the next by 100-199 and so forth. In this representation the control processor 152 increments/decrements the low order two digits while the servo controller 154 increments/decrements the high order two digits.

To move the servo head 50 within the current track, the control processor 152 merely increments or decrements the offset signal to the desired value. To move the servo head 50 to a new track, the value is incremented or decremented until it overflows from 99 to 0 or underflows from 0 to 99, respectively. When either of these conditions occur, the servo controller 154 accumulates the "carry" or "borrow" from the increment or decrement and moves the heads smoothly into the adjacent track.

Referring to Fig. 3, the procedure for using the head 48 to locate the reference track 40 can now be explained. As the magnetic read/write head 48, operating in the write mode, sweeps over the surface 42 of the disk 38, an arbitrary data pattern is written on the surface 42. In the preferred embodiment, the data pattern has a known frequency typically in the range of 533 kHz. As the head 48 scans the surface 42 in the read mode, it detects the signal from the data pattern until the reference track 40 is encountered. Because higher amplitude data is stored on the spacer areas 61 than on the upper and lower polygonal regions 56 and 58 of the reference track 40, the readback signal from the reference track 40 is modulated by the upper and lower polygonal regions 56 and 58 to yield the waveforms in Fig. 11A. The waveforms in Fig. 11A-(a) indicate that the reference track 40 has been located. The relative position of the reference track centerline 60 is determined by noting the position of the head 48 and those segments of the readback signal which have the greatest magnitude and the degree of difference in the magnitude. This was previously described in connection with Figs. 11A and 11B.

Typically, once the center area 60 has been determined, the data around the reference track is erased and a new data pattern is written which covers only the reference track 40. This procedure enhances the readback characteristics of the reference track 40.

Fig. 14 refers to formatting the disk 38. In formatting the disk 38, first all surface area within track 40 area is d.c. erased so that there are no magnetic flux transitions. Then, on the next pass of the disk, the areas 61(a) and 61(b) are written in the areas 54. Thus, these become the main areas of information for establishing the reference 60 since all areas around them and the areas 56 and 58 have all been d.c. erased. Therefore, there is information written on the disk which is independent of the depth of the etched areas 56 and 58. The areas 61(a) and 61(b) at this point may not be as recognizable on a quick scan, as may be desired. Therefore, next a pair of areas 200, which are of a width "$w_1$" are written along and centered on reference 60, with a burst of magnetic transition. The areas 200 are one hundred microseconds long, and separated by areas which are one hundred microseconds and from the areas 61(a) by one hundred microseconds.

Now, Fig. 14 illustrates the read signal depending on the location of a head with a gap width of "$w_1$" relative to the reference line 60. The diagram of Fig. 14(A) illustrates the situation when the head is in fact on the centerline 60. As the disk 38 rotates and passes over the two areas 200, the signal will be two bursts of amplitude m each for a duration of one hundred microseconds and separated by a gap of one hundred microseconds.

Then, as the head of a gap width $w_1$ passes over the area 61(a) and 61(b) the signal will be one-half of the value resulting from the areas 200. This may be referred to as a reference sector.

Fig. 14(B) illustrates the read signal, when the head having a gap width $w_1$, is offset to the inside of the reference line 60. Then the amplitude of the two reference burst signals from the recordings 200 are lower and the signal from the area 61(a) is higher relative to that of the reference sector, and the signal from the area 61(b) is lower. Fig. 14(C) illustrates the read signal when the head is offset to the outside of the reference line 60. Then, again, the amplitude of the two reference burst signals from the recordings 200 are lower, and the signal from the area 61(a) is lower relative to that of the reference sector, and the signal from the area 61(b) is higher.

Then, after the areas 200 are written, the track 60 is scanned and the signals from the recordings 200 are searched out. In doing so, the operator first scans to detect the pulses. Then scanning is continued and readings are made of the signals from the areas 61(a) and 61(b). Depending on which one is higher, then the head is moved to the other side of the reference and from that the operator can do a rough computation as to where it should be. Once that point is realized, even if it is not accurate, the operator can do some fine scanning to determine the center 60.

Benefits from this procedure allows the same writing and checking techniques for the side of the disk 38 opposite to that having the grooves 56 and 58. Keep in mind, that when a disk 38 is formatted, the position of the reference track 40 is dictated by the location of the head on the drive doing the formatting. Thus, once the upper head has been calibrated and the offset is known, then after writing the reference information on the reference track on the servo system, and using that exact same physical position, the same information can be written on the other surface using the head common to that surface. The only difference is that the etched areas 56 and 58 are not present on that surface. However, that is of no concern since they were d.c. erased. Thus, the same algorithm can be used to locate the center position. When the disk 38 is transferred from one drive to another, undoubtedly the lower heads from the two drives will not be in the same position relative to their respective top heads. However, the heads will be scanned to determine where the head of the formatting machine was located and note that as a separate offset between the top and bottom. Thus, the offset information between the top and bottom heads is maintained. Thus, when going from top to bottom surface, the offset is adjusted appropriately.

The procedure used to locate and format the reference track 40 is as follows:

1. The stepper motor 146 positions the head 48 to a location inward from where the reference track 40 is known to be even under the worst case of mechanical tolerance conditions.

2. Start writing tracks of a.c. information.

3. After writing each track, that track is read and the signal is analyzed to determine if it appears similar to any of the waveforms of Figs. 11A(a), (b), (c) or (d). If no such waveform is detected, then the head 48 is moved outwardly in increments with the writing and reading repeated until such waveforms are detected.

4. Stepping, writing and reading are continued until modulated signals of a pattern of 800 $\mu$ seconds of high amplitude and 800 $\mu$ seconds of lower amplitude are detected repeatedly on a track. Preferably, there are 52 sectors around the circumference and it is desired to detect at least 5/6th of all such sectors repeating such pattern.

5. Once the pattern of Step 4 is detected, then is may be assumed that the approximate position of the reference circle 60 has been located.

6. Commence a very detailed scan of moving the head inward a small amount and then beginning to go outward with a very careful scan of writing, reading back, checking the amplitude and the side of the reference track on which the head is located.

7. Then move the head 48 in increments of approximately 1/6th of the width of a track until the readback signals indicate that the centerline 60 has been crossed.

8. Then divide the amount of movement of Step 7 by one-half and move the head in the opposite direction, in increments equal to 1/12th of a track width until the readback signals indicate that the centerline 60 has been crossed.

9. Then move the head in the opposite direction in increments of 1/24th of a track width until the feedback signals indicate that the centerline 60 has been crossd.

10. Repeat this scanning procedure in increments of track width equal to one-half that of the preceding step until the amount of change is a single unit increment and the final scan toward centerline 60 from outside the reference line 60. Upon completion of this step, the position indicates the center of the reference track.

11. Then save the information which has been taken. This comprises a table which represents the end of each of the unit areas 54. Thus, this information will indicate the distance from the end of each unit area 54 to the beginning of the next unit area 54 about the circumference. These increments can be noted as time intervals.

12. D.C. erase the entire area.

13. Then starting from index and using timing as a means of control, write the pulses as illustrated in Fig. 14. In writing these, there are three passes with the areas 61(a) written on one pass, the areas 61(b) written on a second pass and the signals 200 written on the third pass. Note these are thus based on the location of the end of the areas 54 as previously determined.

14. Then the other surface of the disk 38, e.g. surface 80, is d.c. erased.

15. Then Steps 12-13 are repeated relative to surface 80.

Now that the center of the reference track is known, the counter offset value is saved by the controller. Then, any data track can be accessed as the drive knows exactly the distance from the reference track to the data tracks.

After the reference track 40 has been formatted, it can be located through the following procedure.

1. Locate the head 48 inward, by means of the stepper motor, inward from where the reference track 40 can logically be located;

2. Then begin an outward scan and analyze readback data to be within a certain amplitude range and continually adjust the amplitude so as to have a reference amplitude.

3. During the outward scan, scan a short portion of a revolution to determine if the readback signal indicates the unique signal bursts, e.g. the 100 $\mu$ second of signal followed by 100 $\mu$ second of no signal followed by 100 $\mu$ second of signal which represents the presence of burst recordings 200;

4. Repeat step 3 until sense bursts representative of the existence of recordings 200;

5. Once sense presence of the bursts 200, then adjust amplitude to a reference value;

6. Then, after the last 100 $\mu$ second burst, delay 200 $\mu$ seconds. This places the head 48 within the regions of 56 and/or 61a;

7. Now take an amplitude measurement for 200 $\mu$ seconds and store it;

8. Delay another 200 $\mu$ seconds, this places the head within the regions 58 and/or 61b;

9. Now take amplitude measurement for 200 $\mu$ seconds and then compare it to the value stored in step 7;

10. Based on this comparison, the head 48 is moved so as to be on the outward side of the reference track; then

11. The head 48 is moved in and out following steps similar to those of steps 7-10 for fomatting.

The accuracy with which the reference track is located is important to achieve maximum data reliability for several reasons, including data retrieval; interchange between machines; data update by writing over the previously recorded track and thereby erasing it, which requires minimizing the residual, if any, of the previously stored data; improving the system performance by reducing the required frequency of re-alignments (for a given permissible tolerance drift, the more accurate the initial alignment, the longer it will take to reach the tolerance limit); and minimize magnetic signal loss and interference due to magnetic head being mispositioned over a servo groove. (By the nature of the process of the servo grooves, they are not magnetically very good performing regions.)

These features are vitally important in drive systems where the magnetic cores are located at significantly different radii and the track densities are large. The mechanical growth between either core and the optical beam's radial detection region over the operating temperature and humidity require an accurate alignment capability. Such capability must be built into the system comprising the drive and diskette combination.

If more than one data track is placed between adjacent servo tracks, additional reference tracks may be added with each reference track being an integer number of data track spacings from the corresponding data track. This would achieve a high degree of accuracy since the servo is periodic only over one servo track pitch and the linearity within a single servo track pitch is therefore not absolute. The multiple reference patterns would be used to detect the alignment for each separate data track type between the servo grooves. A system with two data tracks between each pair of the hundreds of servo grooves would have two reference tracks: one for the "inner" data track and one for the "outer" data track. Similarly, a system with three data tracks would have an "inner", a "middle", and an "outer" reference track.

Although the present invention has been described in terms of the presently preferred embodiments, it is to be understood that such disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. A magnetic information storage medium for use in a disk drive of a computer comprising:

   a circular magnetic medium having a surface that is accessible by a magnetic read/write transducer and an optical transducer;

   a plurality of optical servo tracks positioned on said surface for conveying optical servo tracking information to said optical transducer; and

   a reference track comprised of half-checkered units with each half-checkered unit comprised of a first region and a second region, said first region positioned on and abutting one side of a reference circle and said second region positioned on and abutting an opposite side of said reference circle, and said first and second regions being positioned in diagonal relationship to each other and said first and second regions being adapted to store lower amplitude magnetic data than a plurality of spacer areas that separate adjacent half-checkered units whereby a modulated readback signal is detected by said magnetic read/write transducer when it passes over said reference track in a read mode.

2. The medium of claim 1 wherein,

   said first and second regions are of substantially similar shapes.

3. The magnetic information storage medium of claim 1 wherein,

   said first region and said second region are comprised of a plurality of indentations made in a magnetic layer of the circular magnetic medium.

4. The magnetic information storage medium of claim 1 wherein,

   said first region and said second region are comprised of a plurality of pits arranged in a plurality of rows.

5. The magnetic information storage medium of claim 3 wherein,

   each of said plurality of rows includes approximately twenty pits.

6. The magnetic information storage medium of claim 3 wherein,

   said pits are formed by depressing the magnetic layer of a floppy disk in a press with a stamper disk.

7. The magnetic information storage medium of claim 1 wherein,

   said first region and said second region each comprise a uniform region having less magnetic material than said plurality of spacer areas.

8. A process for determining the center of a half-checkered reference track on a first surface of a magnetic media for storing magnetic data and wherein the reference track includes a plurality of unit areas each having a first region and a second region with each region being of similar shape, abutting a reference circle and diagonally offset relative to each other on opposite sides of said reference circle, said first and second regions being structured such that any magnetic data stored therein is of a different magnitude than data stored on the track outside of said regions, the process including the steps of:

a. positioning a magnetic read/write head to a location within the approximate location said reference circle and on one known side of said reference circle;

b. repeatedly write tracks of information;

c. after writing each track, readback information from the written track;

d. after reading each readback signal that does not indicate the presence of said first and second regions, step the head closer toward said reference circle;

e. after first reading a readback signal indicating the presence of said first and second regions, then move the head in increments of a fraction of the width of a track and repeatedly write and readback signals at each location until it is determined that the centerline has been crossed;

f. then repeat step (e) at smaller increments and moving the head in the opposite direction until the centerline is known to be crossed;

g. repeat steps (e) and (f) until the amount of change is a single unit increment; and

h. moving said read/write head one unit increment toward the centerline.

9. A process for determining the center of a half-checkered reference track on a first surface of a magnetic media for storing magnetic data and wherein the reference track includes a plurality of unit areas each having a first region and a second region with each region being of similar shape, abutting a reference circle and diagonally offset relative to each other on opposite sides of said reference circle, said first and second regions being structured such that any magnetic data stored therein is of a different magnitude than data stored on the track outside of said regions, and formatting a second surface of said magnetic media consistent with the format of said first surface, the process including the steps of:

a. positioning a magnetic read/write head to a location within the approximate location said reference circle and on one known side of said reference circle;

b. repeatedly write tracks of information;

c. after writing each track, readback information from the written track;

d. after reading each readback signal that does not indicate the presence of said first and second regions, step the head closer toward said reference circle;

e. after first reading a readback signal indicating the presence of said first and second regions, then move the head in increments of a fraction of the width of a track and repeatedly write and readback signals at each location until it is determined that the centerline has been crossed;

f. then repeat step (e) at smaller increments and moving the head in the opposite direction until the centerline is known to be crossed;

g. repeat steps (e) and (f) until the amount of change is a single unit increment; and

h. moving said read/write head one unit increment toward the centerline.

i. memorizing that portion of the information gained during the steps (e) - (h) indicating the distance between and position of unit areas with respect to a starting index;

j. erasing said second surface of said media; and

k. then, using the memorized information as a location reference, writing on said second surface, third and fourth regions of similar size and shape of said first and second regions, in a pattern corresponding to the pattern of said first and second regions on said half-checkered reference track.

10. The process of claim 9 including the further step of:

l. writing bursts on said second surface within said reference tracks and outside said unit area to further designate the proximate location of said unit areas.

11. A process for determining the center of a half-checkered reference track on a surface of a magnetic media for storing magnetic data and wherein the reference track includes a plurality of unit areas with a first unit area having a first recorded region and a second region with each region being of similar shape, abutting a reference circle and diagonally offset relative to each other on opposite sides of said reference circle, said first and second regions being structured such that readback of magnetic data stored therein provides a signal different than that of readback of data stored on the track outside of said regions, and including a second unit area with a recorded region symmetrical to said reference track and a designated distance from said first unit, the process including the steps of:

a. positioning a magnetic read/write to a location within the approximate location of said reference circle and on a first known side of said reference circle;

b. then readback information from said media for at least a portion of a revolution with said head in position;

c. adjust the gain of the readback signal to a desired amplitude reference;

d. repeat steps b and c until the readback signal represents the presence of said burst signals;

e. once sense presence of the bursts, then rotate said disk the distance known to exist between the position of said burst and said adjacent unit area;

f. then read the amplitude of the readback signal and store it;

g. then rotate said disk the distance known to exist between said first and second recorded regions;

h. then read the amplitude of the readback signal and then compare it to the value stored in step (f);

i. based on the comparison of step (h), move the head so as to be on the side of said reference track opposite said first side;

j. then move said head towards said first side in increments of a fraction of the width of a track and repeatedly readback the signal at each location until it is determined that the centerline has been crossed;

k. then repeat step (j) at smaller increments and moving the head in the opposite direction until the centerline is known to be crossed;

l. repeat steps (j) and (k) until the amount of charge is a single unit increment; and

m. move said head one unit increment toward said centerline.

Fig_1 (PRIOR ART)

Fig_4

Fig_2 (PRIOR ART)

Fig_3

Fig_3A

Fig_5

Fig_6

Fig_7

Fig_8

Fig_8A

Fig_9

Fig_10

Fig_12

Fig_13

Fig_11A

Fig_11B

Fig_14